# EUROPÄISCHE PATENTANMELDUNG

(11) **EP 1 935 727 A2**
(43) Veröffentlichungstag der Anmeldung: **25.06.2008**
(21) Anmeldenummer: 07021678.3
(22) Anmeldetag: 08.11.2007
(51) Int. Cl.: B60R 22/26

(54) **Fahrgastsitz**

(30) Priorität: 22.12.2006 DE 102006062165
(71) Anmelder: Vogelsitze GmbH, 76228 Karlsruhe (DE)
(72) Erfinder: Gebhardt, Reiner, 76307 Karlsbad (DE)
(74) Vertreter: Dimmerling, Heinz

(57) **Zusammenfassung**

Ein Fahrgastsitz für ein Personenbeförderungsfahrzeug, insbesondere Bus, mit einem Sicherheitsgurt (1'), welcher zur Änderung seiner Verlaufsrichtung (1a', 1b') über einen Umlenker (2') geführt ist, ist dadurch gekennzeichnet, dass ein Begrenzungselement (3') vorhanden ist, mittels dem die Änderung der Verlaufsrichtung (1a', 1b') des Gurtes (1') begrenzt ist.

## Beschreibung

Die Erfindung betrifft einen Fahrgastsitz nach dem Oberbegriff des Anspruchs 1, für ein Personenbeförderungsfahrzeug, insbesondere Bus, mit einem Sicherheitsgurt, welcher zur Änderung seiner Verlaufsrichtung über einen Umlenker geführt ist.

Ein derartiger Fahrgastsitz ist im Stand der Technik hinlänglich bekannt, wobei der Sicherheitsgurt als so genannter Dreipunktgurt oder Zweipunktgurt ausgebildet sein kann. In jedem Fall ist der Gurtverlauf so, dass der Gurt aus einem so genannten Retraktor kommend zunächst zu dem Umlenker geführt ist, von wo aus er dann über den Körper eines Fahrgastes zu einem so genannten Gurtschloss geführt wird. Der Umlenker bildet somit ebenso wie das Gurtschloss einen Verankerungspunkt des Sicherheitsgurtes mit dem betreffenden Fahrzeug. Der Umlenker ist daher ebenso wie seine Befestigung mit dem Fahrzeug sehr stabil ausgebildet.

Zur Umlenkung des Gurtes weist der Umlenker in der Regel eine langlochförmige Öffnung auf, durch welche sich der Gurt erstreckt, weshalb die Länge des Langlochs etwa der Breite des Gurtes entspricht.

Insbesondere bei Fahrgastsitzen mit Zweipunktgurt tritt beim Angurten häufig das Problem auf, dass sich der Gurt in der Öffnung des Umlenkers verdreht, was dadurch verursacht wird, dass der Gurt bedingt durch den beim Angurten erforderlichen natürlichen Bewegungsablauf des Fahrgastes nicht in einer Richtung von etwa 90 Grad zum Verlauf des Langloches durch das Langloch gezogen wird, sondern in einem Winkel von etwa 30 Grad oder weniger. Hierdurch wird der Gurt nicht mehr über die Längsseite des Langlochs gezogen, sondern im Wesentlichen über einen Endbereich des Langloches. Dies kann dazu führen, dass der Gurt in verdrehter Form über den Körper des Fahrgastes verläuft. Das ist in der Regel nicht nur für den Fahrgast unangenehm, sondern kann im Falle eines Unfalls dazu führen, dass der Gurt den Körper des Fahrgastes einschnürt und den Fahrgast verletzt. Denn nur, wenn der Gurt in seiner gesamten Breite über den Körper des Fahrgastes geführt ist, erfüllt er seine Funktion ordnungsgemäß und schnürt den Körper des Fahrgastes nicht ein.

Um eine Verdrehung des Gurtes zu vermeiden, muss der Fahrgast daher den Gurt so durch den Umlenker ziehen, dass er in einer Richtung von etwa 90 Grad zum Verlauf des Langloches durch das Langloch gezogen wird. Dies ist bei Zweipunktgurten jedoch sehr schwierig, weshalb dies manchmal nicht geschieht, sondern eine Verdrehung des Gurtes in Kauf genommen wird.

Es ist Aufgabe der Erfindung, einen eingangs genannten Fahrgastsitz derart auszubilden, dass eine Verdrehung des Gurtes beim Angurten vermieden wird.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für ein Personenbeförderungsfahrzeug, insbesondere Bus, mit einem Sicherheitsgurt, welcher zur Änderung seiner Verlaufsrichtung über einen Umlenker geführt ist, dadurch gekennzeichnet, dass ein Begrenzungselement vorhanden ist, mittels dem die Änderung der Verlaufsrichtung des Gurtes begrenzt ist.

Dadurch, dass die Änderung der Verlaufsrichtung des Gurtes begrenzt ist, kann ausgeschlossen werden, dass der Gurt in einer solchen Richtung aus dem Langloch gezogen wird, dass er nicht mehr über die Längsseite des Langlochs, sondern im Wesentlichen über einen Endbereich des Langlochs gezogen wird.

Hierdurch wird erreicht, dass sich der Gurt beim Durchziehen durch das Langloch nicht mehr verdreht, sondern seine Lage beibehält.

Als sehr vorteilhaft hat es sich herausgestellt, die Begrenzung derart auszubilden, dass die Änderung der Verlaufsrichtung des Gurtes auf maximal 140 Grad, vorzugsweise 120 Grad, insbesondere 90 Grad begrenzt ist.

Dadurch, dass die Änderung der Verlaufsrichtung des Gurtes auf maximal 140 Grad, vorzugsweise 120 Grad, insbesondere 90 Grad begrenzt ist, bleibt er im Wesentlichen mit seiner betreffenden Oberfläche auf der Begrenzung des Langloches liegen. Zwar treten geringe Stauchungen und dadurch bedingt in Längsrichtung des Gurtes verlaufende Falten auf, jedoch sind diese nicht so groß, dass sich der Gurt in dem Langloch verdrehen kann. Der Fahrgast braucht sich somit nicht mehr bemühen, den Gurt in einer entgegen dem natürlichen Bewegungsablauf des Fahrgastes verlaufenden Richtung durch den Umlenker zu ziehen, sondern kann die auf beliebige Weise durchführen, das heißt den Gurt in beliebiger Weise zu dem Gurtschloss führen.

Die Begrenzung der Änderung der Verlaufsrichtung des Gurtes als Kriterium kann deswegen gewählt werden, weil die Verlaufsrichtung des Gurtes, mit der der Gurt aus dem Retraktor dem Umlenker zugeführt wird, in der Regel gleich ist und in einem Winkel von etwa 45 Grad zur Richtung des Langlochs verläuft. Wesentlich ist jedoch, dass die Richtung des Gurtes, mit der der Gurt aus dem Langloch herausgezogen wird, einen minimalen Winkel von etwa 40 Grad nicht unterschreitet. Vorzugsweise beträgt der Winkel 60 Grad, insbesondere 90 Grad.

Besonders vorteilhaft ist eine Ausführungsform der Erfindung, bei der der Gurt durch eine schwenkbar angeordnete Gurtführung geführt ist und das Begrenzungselement als Anschlag für die Gurtführung ausgebildet ist. Hierdurch wird auf einfache Weise die Begrenzung der Verlaufsrichtung des Gurtes erreicht. Da eine Gurtführung in der Regel bei Fahrzeugsitzen immer vorhanden ist, lässt sich die Begrenzung auf sehr einfache Weise erreichen. Darüber hinaus arbeitet eine derartige Begrenzung sehr zuverlässig.

Als sehr vorteilhaft hat sich ein Anschlag herausgestellt, welcher als scheibenförmiges Element ausgebildet ist, aus welchem sich etwa in senkrechter Richtung zu seiner Ebene ein Steg erstreckt. Ein derart ausgebildeter Anschlag lässt sich beispielsweise als Kunststoff-Spritzteil herstellen, was sich sehr günstig auf die Kosten auswirkt. Des Weiteren lässt es sich auf sehr einfache Weise am Sitzwinkel, an dem auch der Umlenker befestigt ist, befestigen.

Sehr vorteilhaft ist es, wenn das scheibenförmige Element symmetrisch zu einer Symmetrielinie ausgebildet ist. Hierdurch kann das Element an beiden Seiten eines Fahrgastsitzes angeordnet werden, wodurch es unabhängig davon, an welcher Seite des Fahrgastsitzes der Umlenker angeordnet ist, verwendet werden kann. Dies wirkt sich sehr vorteilhaft auf die Lagerhaltung aus.

Nachfolgend sind Ausführungsbeispiele der Erfindung anhand der Zeichnung näher erläutert. Es zeigt:
- Fig. 1: eine schematische Anordnung eines Sitzwinkels eines Fahrgastsitzes mit daran befestigtem Umlenker und Begrenzungselement mit einem Gurtverlauf, bei dem der Gurt in einer Richtung von etwa 90 Grad zum Verlauf des Langlochs aus dem Langloch heraus verläuft, und
- Fig. 2: dieselbe Anordnung wie in Fig. 2, jedoch mit einem Gurtverlauf, bei dem der Verlauf des Gurtes aus dem Langloch des Umlenkers heraus durch das Begrenzungselement begrenzt ist.

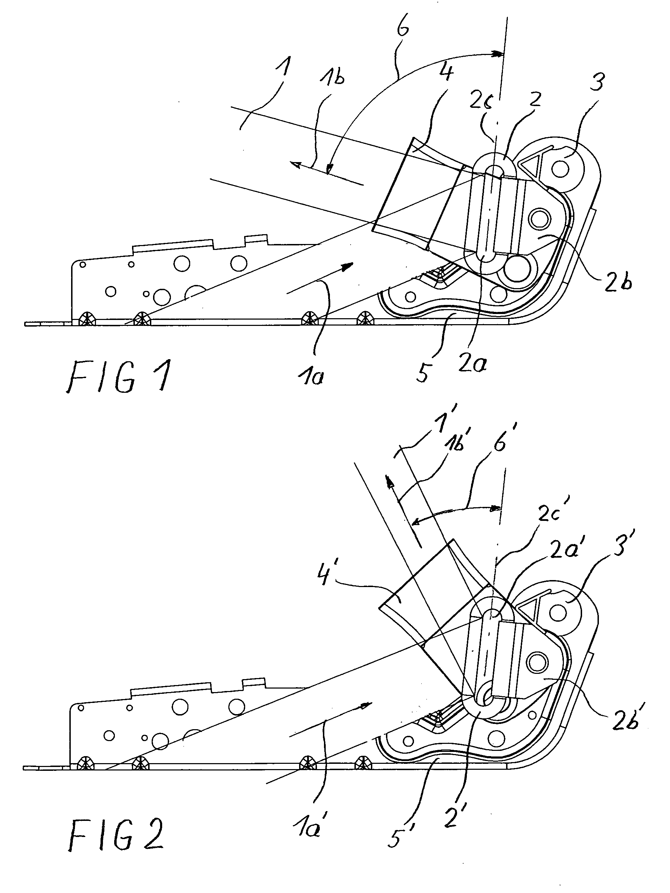

Wie Fig. 1 entnommen werden kann, ist an einem Sitzwinkel 5 eines Fahrgastsitzes ein Umlenker 2 befestigt. Der Umlenker 2 besteht aus einem ein Langloch 2a bildenden Drahtelement, welches drehbar in einer Lasche 2b befestigt ist, welche am Sitzwinkel 5 befestigt ist. Durch das Langloch 2a ist ein Gurt 1 geführt. Die Verlaufsrichtung 1a des Gurtes 1, mit dem der Gurt 1 von einem in der Figur nicht dargestellten Retraktor zum Langloch 2a geführt wird, bildet mit der Achse 2c des Langlochs 2a einen Winkel von etwa 45 Grad. Nachdem der Gurt 1 durch das Langloch 2a geführt ist, verläuft er durch eine Gurtführung (Sleeve), welche schwenkbar am Sitzwinkel 5 befestigt ist. Die Verlaufsrichtung 1 b des Gurtes 1, mit der der Gurt 1 das Langloch 2a verlässt, bildet mit der Achse 2c des Langlochs 2a einen Winkel 6 von etwa 80 Grad. Die Änderung der Verlaufsrichtung 1 a, 1 b des Gurtes 1 beträgt somit etwa 35 Grad.

Des Weiteren ist am Sitzwinkel 5 ein als scheibenförmiges Element 3 ausgebildetes Begrenzungselement befestigt. Das Element 3 stellt einen Anschlag für die Gurtführung 4 dar. In der in Fig. 1 dargestellten Stellung befindet sich die Gurtführung 4 in einem Abstand vom Anschlag 3.

Die in Fig. 2 dargestellte Anordnung entspricht der in Fig. 1 dargestellten Anordnung. Die gleichen Elemente sind mit denselben Bezugszeichen versehen. Zur Unterscheidung weisen sie jedoch einen Strich auf.

Im Unterschied zu der in Fig. 1 dargestellten Stellung des Gurtverlaufs 1a', 1 b' ist der Gurtverlauf bei der in Fig. 2 dargestellten Stellung derart, dass die Änderung der Verlaufsrichtung 1 a', 1 b' des Gurtes 1 etwa 90 Grad beträgt. Hierdurch bildet die Verlaufsrichtung 1 b' des Gurtes 1, mit der er aus dem Langloch 2a' heraus verläuft, mit der Achse 2c' des Langlochs 2a' einen Winkel 6' von etwa 45 Grad.

Durch das Element 3' kann die Gurtführung 4' nicht weiter verschwenkt werden. Damit kann sich der Winkel 6' nicht weiter verringern, sodass die Änderung der Verlaufsrichtung 1 a', 1 b' des Gurtes 1' auf etwa 90 Grad begrenzt ist. Hierdurch wird verhindert, dass sich der Gurt in den Langloch 2a' verdreht.

## Patentansprüche

1. Fahrgastsitz für ein Personenbeförderungsfahrzeug, insbesondere Bus, mit einem Sicherheitsgurt (1), welcher zur Änderung seiner Verlaufsrichtung (1 a, 1 b) über einen Umlenker (2) geführt ist, **dadurch gekennzeichnet, dass** ein Begrenzungselement (3) vorhanden ist, mittels dem die Änderung der Verlaufsrichtung (1 a, 1 b) des Gurtes (1) begrenzt ist.

2. Fahrgastsitz nach Anspruch 1, **dadurch gekennzeichnet, dass** die Änderung der Verlaufsrichtung (1a, 1 b) des Gurtes (1) auf maximal 140 Grad, vorzugsweise 120 Grad, insbesondere 90 Grad begrenzt ist.

3. Fahrgastsitz nach Anspruch 1 oder 2, **dadurch gekennzeichnet, dass** der Gurt (1) durch eine schwenkbar angeordnete Gurtführung (4) geführt ist und das Begrenzungselement (3) als Anschlag (3) für die Gurtführung (4) ausgebildet ist.

4. Fahrgastsitz nach Anspruch 3, **dadurch gekennzeichnet, dass** der Anschlag (3) als scheibenförmiges Element ausgebildet ist, aus welchem sich etwa in senkrechter Richtung zu seiner Ebene ein Steg (3a) erstreckt.

5. Fahrgastsitz nach Anspruch 4, **dadurch gekennzeichnet, dass** das scheibenförmige Element (3) symmetrisch zu einer Symmetrielinie (3b) ausgebildet ist.
